# EUROPÄISCHE PATENTSCHRIFT

(11) **EP 2 813 657 B1**
(45) Veröffentlichungstag und Bekanntmachung des Hinweises auf die Patenterteilung: **15.04.2020**
(21) Anmeldenummer: 14170723.2
(22) Anmeldetag: 02.06.2014
(51) Int. Cl.: E06B 1/00, E06B 1/28, E06B 3/22, E06B 7/10

(54) **Rahmenbaugruppe**
Frame system
Module d'encadrement de porte et/ou de fenêtre

(30) Priorität: 11.06.2013 DE 202013102513 U
(43) Veröffentlichungstag der Anmeldung: 17.12.2014
(73) Patentinhaber: REHAU AG + Co, 95111 Rehau (DE)
(72) Erfinder: Bauer, Ralf, 90768 Fürth (DE); Schork, Rainer, 91330 Bammersdorf (DE)

(56) Entgegenhaltungen:
- EP-A1- 1 703 063
- EP-A1- 1 801 342
- DE-A1- 3 347 028
- DE-U1- 29 803 878
- FR-A1- 2 757 207

## Beschreibung

Die vorliegende Erfindung betrifft eine Rahmenbaugruppe, wobei mindestens einer der die Rahmenbaugruppe aufbauenden Profilholme aus einem Kunststoffprofil für eine Fenster-Rahmenbaugruppe mit einem Falzgrund und einem Außenüberschlag mit wenigstens einer Hohlkammer gebildet ist, wobei der Außenüberschlag im Querschnitt in Richtung von einer dem Falzgrund abgewandten Außenseite zu einer zum Falzgrund gerichteten Seite zumindest eine zur Außenseite gerichtete Hohlkammer und eine zur zum Falzgrund gerichteten Seite gerichtete Hohlkammer umfasst, und die zur zum Falzgrund gerichteten Seite gerichtete Hohlkammer eine Öffnung umfasst, wobei sich die Öffnung über die gesamte Länge des Kunststoffprofils erstreckt.

Im Stand der Technik ist eine Vielzahl derartiger Kunststoffprofile und Rahmenbaugruppen für Türen und Fenster beschrieben. Derartige Kunststoffprofile für Rahmenbaugruppen werden in an sich bekannter Weise mittels Extrusion bzw. Coextrusion hergestellt. Aus den extrudierten bzw. coextrudierten Kunststoffprofilen werden Türen bzw. Fenster hergestellt, indem die Kunststoffprofile auf Gehrung geschnitten werden und die auf Gehrung geschnittenen Kunststoffprofilstücke in den Eckbereichen unter Bildung der Rahmenbaugruppen entsprechender Fenster bzw. Türen verschweißt werden.

Üblicherweise weisen derartige Kunststoffprofile für Fenster- und/oder Tür-Rahmenbaugruppen einen Außenüberschlag auf, der in der Regel eine Nut zur Aufnahme eines Dichtungselements aufweist. Der Außenüberschlag wird dabei von einer Hohlkammer gebildet, die an vier Seiten von Stegen des Kunststoffprofils umgeben ist. Diese Hohlkammer ist zur Belüftung und Entwässerung der aus dem Kunststoffprofil gebildeten Rahmenbaugruppen erforderlich. Kunststoffprofile für Fenster- und/oder Tür-Rahmenbaugruppen mit einem Außenüberschlag, der in Richtung des Glasfalzes mehr als eine Hohlkammer aufweist, sind beispielsweise aus der FR 2 757 207 A1, der EP 1 703 063 A1 und der EP 1 801 342 A1 bekannt.

Aus der DE 298 03 978 U1 geht ein Fenster- und Türprofil hervor, in dessen Haupthohlkammer Rohre zur Rückgewinnung von Lüftungswärme aufgenommen sind. Es beschreibt eine Rahmenbaugruppe nach dem Oberbegriff des Anspruchs 1.

Derartige Kunststoffprofile besitzen für eine daraus gebildete Rahmenbaugruppe günstige Eigenschaften. Jedoch besteht im Markt ein Bedarf an Kunststoffprofilen, aus denen Rahmenbaugruppen mit verbesserten Eigenschaften aufgebaut werden können.

Dementsprechend liegt die Aufgabe der vorliegenden Erfindung in der Bereitstellung einer eine Rahmenbaugruppe mit verbesserten Eigenschaften.

Insbesondere soll in der Rahmenbaugruppe ein elektrisches Lüftungssystem einschließlich einer entsprechenden Verkabelung einfach integriert sein.

Diese und andere Aufgaben werden gemäß der vorliegenden Erfindung durch eine Rahmenbaugruppe mit den Merkmalen des Anspruchs 1 gelöst. Bevorzugte Ausführungsformen der erfindungsgemäßen Rahmenbaugruppe sind in den abhängigen Patentansprüchen beschrieben.

Gemäß der vorliegenden Erfindung wurde erkannt, dass elektrische Geräte wie beispielsweise ein elektrisches Lüftungssystem einschließlich einer entsprechenden Verkabelung einfach in das Kunststoffprofil einer Fenster-Rahmenbaugruppe integriert werden kann, wenn der Außenüberschlag im Querschnitt in Richtung von einer dem Falzgrund abgewandten Seite zu einer zum Falzgrund gerichteten Seite in mindestens zwei Hohlkammern unterteilt wird. Die zur Außenseite gewandte Hohlkammer des Außenüberschlags kann dann weiter die Aufgabe der Belüftung und Bewässerung der aus dem erfindungsgemäßen Kunststoffprofil gebildeten Fenster-Rahmenbaugruppe wahrnehmen, während in der zweiten Kammer, die sich auf der zum Falzgrund gerichteten Seite des erfindungsgemäßen Kunststoffprofils befindet, die Verkabelung des entsprechenden elektrischen Geräts gezogen werden kann. Durch die Trennung zwischen den beiden Kammern ist gewährleistet, dass keine Feuchtigkeit an die Verkabelung des in Fenster-Rahmenbaugruppe gebauten Lüftungssystems gelangt.

Dementsprechend liegt die vorliegende Erfindung in der Bereitstellung einer Rahmenbaugruppe, wobei mindestens einer der die Rahmenbaugruppe aufbauenden Profilholme aus einem Kunststoffprofil für eine Fenster-Rahmenbaugruppe mit einem Falzgrund und einem Außenüberschlag mit wenigstens einer Hohlkammer gebildet ist, wobei der Außenüberschlag im Querschnitt in Richtung von einer dem Falzgrund abgewandten Außenseite zu einer zum Falzgrund gerichteten Seite zumindest eine zur Außenseite gerichtete Hohlkammer und eine zur zum Falzgrund gerichteten Seite gerichtete Hohlkammer umfasst, und die zur zum Falzgrund gerichteten Seite gerichtete Hohlkammer eine Öffnung umfasst, wobei sich die Öffnung über die gesamte Länge des Kunststoffprofils erstreckt, wobei darin ein Lüftungssystem aufgenommen ist, dessen Verkabelung zumindest teilweise in der zur zum Falzgrund gerichteten Seite gerichteten Hohlkammer des Kunststoffprofils aufgenommen ist.

Zwischen der zur Außenseite gerichteten Hohlkammer und der zur zum Falzgrund gerichteten Seite gerichteten Hohlkammer können im Außenüberschlag des erfindungsgemäß verwendeten Kunststoffprofils weitere Hohlkammern, insbesondere eine, zwei oder drei weitere Hohlkammern, angeordnet sein.

Erfindungsgemäß umfasst die zur zum Falzgrund gerichtete Seite gerichtete Hohlkammer des erfindungsgemäß verwendeten Kunststoffprofils eine Öffnung. Durch diese Öffnung kann die Verkabelung leicht in die zur zum Falzgrund gerichteten Seite gerichtete Hohlkammer des erfindungsgemäß verwendeten Kunststoffprofils eingeführt und durch die Hohlkammer geführt werden. Dabei erstreckt sich die Öffnung über die gesamte Länge des Kunststoffprofils. Auf diese Weise kann die Verkabelung leicht bereits mit angeschlossenem Stecker über die gesamte Länge des Kunststoffprofils gezogen werden und ist des Weiteren über die gesamte Länge des Kunststoffprofils zugänglich und kann ggf. ersetzt werden.

Es kann sich in diesem Zusammenhang als günstig erweisen, wenn die Öffnung durch ein entsprechendes Deckelprofil verschließbar ist bzw. verschlossen ist. Auf diese Weise ist die in die Hohlkammer aufgenommene Verkabelung vor äußeren Einflüssen wie beispielsweise Feuchtigkeit oder mechanischen Einflüssen geschützt.

In der Praxis hat es sich als besonders günstig erwiesen, wenn es sich bei dem erfindungsgemäßen Kunststoffprofil um ein Blendrahmenprofil handelt. Aufgrund ihrer Größe sind Blendrahmenprofile zur Aufnahme von elektrischen Geräten wie beispielsweise eines Lüftungssystems sowie einer dazu erforderlich Verkabelung besonders geeignet.

Es kann sich auch als vorteilhaft erweisen, wenn das erfindungsgemäße Kunststoffprofil zumindest teilweise faserverstärkt ausgebildet ist. Derartige faserverstärkte Kunststoffprofile ermöglichen es, die sonst in die Haupthohlkammer der Kunststoffprofile einzuführende Armierung beispielsweise aus Stahl wegzulassen. Dadurch steht einem ggf. in das Kunststoffprofil zu integrierenden Elektrogerät, wie beispielsweise einem Lüftungssystem, mehr Raum zur Verfügung. Hinsichtlich Details zum Aufbau und zur Herstellung eines derartigen zumindest teilweise faserverstärktem Kunststoffprofils wird auf die WO 2009/024264 A1 verwiesen. Es hat sich als besonders günstig erwiesen, wenn das erfindungsgemäße Kunststoffprofil ein Kernprofil aus faserverstärktem Kunststoff, insbesondere glasfaserverstärktem Polyvinylchlorid (PVC), und ein damit verbundenes Mantelprofil aus nicht faserverstärktem Kunststoff, insbesondere aus unverstärktem Hart-PVC (PVC-U), umfasst.

In Bezug auf die erfindungsgemäße Rahmenbaugruppe kann es von Vorteil sein, wenn in der zum Falzgrund gerichteten Seite gerichtete Hohlkammer des Kunststoffprofils mindestens ein Kabel aufgenommen ist.

Erfindungsgemäß ist in der Rahmenbaugruppe ein Lüftungssystem aufgenommen, dessen Verkabelung zumindest teilweise in der zur zum Falzgrund gerichteten Seite gerichteten Hohlkammer des Kunststoffprofils aufgenommen ist. Es ist bevorzugt, dass die Verkabelung über möglichst lange Längenabschnitte in der zur zum Falzgrund gerichteten Seite gerichteten Hohlkammer des Kunststoffprofils aufgenommen ist.

Im Folgenden soll die Erfindung anhand der in den Figuren dargestellten, nicht einschränkenden Ausführungsbeispielen nicht näher beschrieben werden.

Es zeigen:
- Fig. 1: eine Querschnittsdarstellung eines Kunststoffprofils gemäß dem Stand der Technik,
- Fig. 2: eine Querschnittsdarstellung eines Ausschnitts des Außenüberschlags eines Kunststoffprofils, welche nicht zum Gegenstand der Erfindung gehört,

- Fig. 3: eine Querschnittsdarstellung eines Ausschnitts des Außenüberschlags eines Kunststoffprofils, das in einer weiteren Ausführungsform der vorliegenden Erfindung verwendbar ist,
- Fig. 4: eine Querschnittsdarstellung eines Ausschnitts eines Kunststoffprofils, das in einer weiteren Ausführungsform der vorliegenden Erfindung verwendbar ist,
- Fig. 5: eine Querschnittsdarstellung eines Kunststoffprofils, welche nicht zum Gegenstand der Erfindung gehört,

- Fig. 6: eine Querschnittsdarstellung eines Ausschnitts eines Kunststoffprofils, das in einer weiteren Ausführungsform der vorliegenden Erfindung verwendbar ist, und
- Fig. 7: eine schematische Darstellung einer als Blendrahmen ausgebildeten FensterRahmenbaugruppe mit darin aufgenommener Lüftungseinrichtung gemäß einer Ausführungsform der vorliegenden Erfindung.

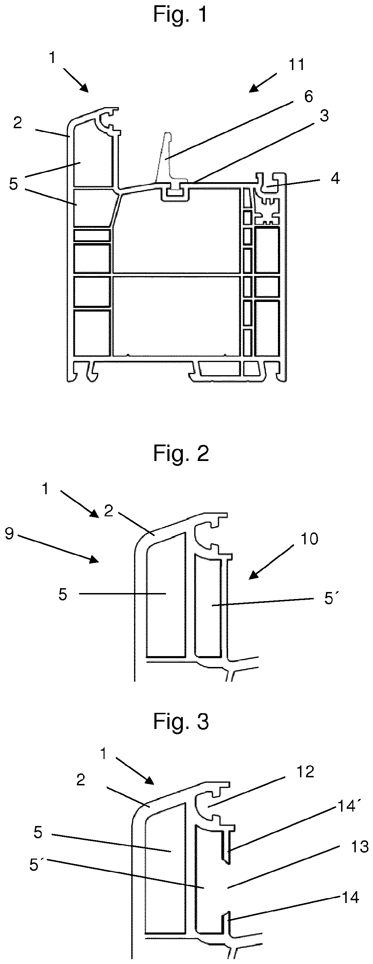

In Fig. 1 ist ein Kunststoffprofil 1 gemäß dem Stand der Technik in einer Querschnittsdarstellung gezeigt. Das Kunststoffprofil 1 ist als Fensterprofil 1, insbesondere als Blendrahmenprofil, ausgestaltet und weist einen Außenüberschlag 2, einen daran angrenzenden Falzgrund 3 zur Aufnahme eines Flächenelements, beispielsweise eine Isolierglasscheibe (nicht dargestellt), sowie eine Nut 4 zur Aufnahme einer Profilleiste zur Halterung des Flächenelements auf. In den Falzgrund 3 ist ein Fuß einer Mitteldichtung 6 aufgenommen. In der in Fig. 1 gezeigten Darstellung weist der Außenüberschlag 2 des Kunststoffprofils 1 in vertikaler Richtung mehrere übereinander angeordnete Hohlkammern 5 auf. In horizontaler Richtung weist der Außenüberschlag 2 jedoch nur eine Hohlkammer 5 auf, die im Querschnitt von allen Seiten von Stegen des Kunststoffprofils 1 umgeben ist. Diese Hohlkammer 5 des Kunststoffprofils 1 dient zur Belüftung und Entwässerung einer Rahmenbaugruppe 11, die durch Verschweißen der Eckbereiche von auf Gehrung geschnittenen Profilholmen des Kunststoffprofils 1 aufgebaut ist.

In Fig. 2 ist eine Querschnittsdarstellung eines Kunststoffprofils 1, welche nicht zum Gegenstand der Erfindung gehört, in einer ausschnittsweisen Querschnittsdarstellung gezeigt. Das Kunststoffprofil 1 ist wiederum als Blendrahmenprofil 1 ausgeführt. Das Kunststoffprofil 1 umfasst dabei einen Außenüberschlag 2, der in Fig. 2 in vertikaler Richtung aus mehreren Hohlkammern 5 aufgebaut ist, einen an den Außenüberschlag 2 angrenzenden Falzgrund 3 sowie eine an den Falzgrund 3 angrenzende Nut 4 zur Aufnahme einer Profilleiste zur Halterung eines in den Falzgrund 3 aufzunehmenden, nicht dargestellten Flächenelements, beispielsweise einer Isolierglasscheibe. In der gezeigten Ausführungsform ist das Kunststoffprofil 1 als Hohlprofil aus nicht faserverstärktem Polyvinylchlorid (PVC), vorzugsweise aus Hart-PVC (PVC-U, ausgeführt. Alternativ ist es besonders bevorzugt, wenn das erfindungsgemäße Kunststoffprofil 1 ein Kernprofil 7 aus faserverstärktem Kunststoff, vorzugsweise aus glasfaserverstärktem Polyvinylchlorid, und ein damit verbundenes Mantelprofil 8 aus unverstärktem Kunststoff, vorzugsweise aus unverstärktem Polyvinylchlorid (PVC-U), beinhaltet.

Etwa ab der Höhe des Falzgrunds 3 ist der Außenüberschlag 2 im Querschnitt in Richtung von einer dem Falzgrund 3 abgewandten Außenseite 9 des n Kunststoffprofils 1 zu einer zum Falzgrund 3 gerichteten Seite 10 in zwei Hohlkammer 5, 5' unterteilt, nämlich eine zur Außenseite 9 gerichtete Hohlkammer 5 sowie eine zur zum Falzgrund gerichteten Seite 10 gerichtete Hohlkammer 5'. Wird das Kunststoffprofil 1 nun vom Falzgrund 3 aufgefräst und ein Elektrogerät, nämlich ein Lüftungssystem, in das Kunststoffprofil 1 integriert, erfolgt die für die Verkabelung des in das Kunststoffprofil 1 eingesetzten Elektrogeräts erforderliche Verkabelung nun in der Hohlkammer 5', während die äußere Hohlkammer 5 wie in einem herkömmlichen Kunststoffprofil 1 zur Belüftung und Entwässerung der aus Profilholmen des Kunststoffprofil 1 gebildeten Rahmenbaugruppe 11 dienen. Nach dem Einsetzen des Elektrogeräts wird das Kunststoffprofil 1 bevorzugt mit einem entsprechenden Deckel verschlossen, durch den dann ein entsprechender Abschnitt des Falzgrunds 3 gebildet wird. In der in Fig. 2 gezeigten Ausführungsform erstrecken sich die beiden erfindungsgemäß relevanten Hohlkammern 5, 5' bis zur Oberseite des Außenüberschlags 2. In diesem Bereich ist eine zusätzliche Nut 12 zur Aufnahme eines in Fig. 2 nicht dargestellten Dichtungsprofils zur Anlage am Flächenelement angeordnet.

In den Figuren 3, 4 und 6 sind weitere Ausführungsformen erfindungsgemäß einsetzbarer Kunststoffprofile 1 beschrieben. Diese weiteren Ausführungsformen des Kunststoffprofils 1 besitzen einen zu dem in Fig. 2 gezeigten Beispiel ähnlichen Aufbau. Es wird hierzu auf die Ausführungen zu Fig. 2 hingewiesen. In den Figuren bezeichnen gleiche Bezugszeichen gleiche Elemente des Kunststoffprofils 1. Um Wiederholungen zu vermeiden, wird im Folgenden lediglich auf die Unterschiede in den einzelnen Ausführungsformen hingewiesen.

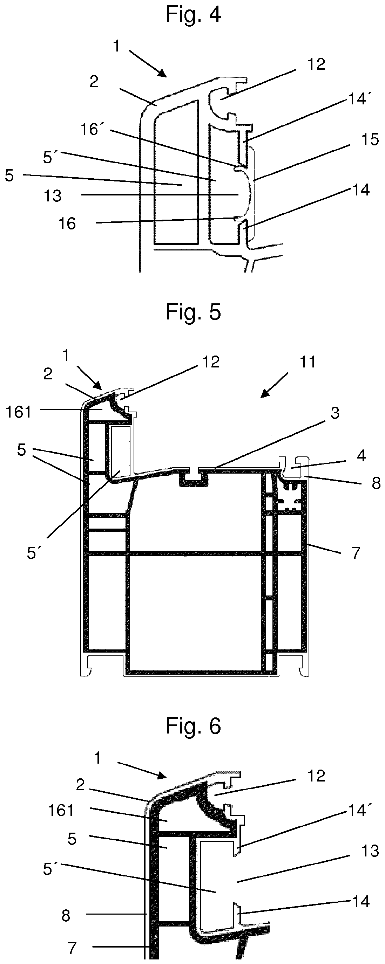

In Fig. 3 ist eine weitere Ausführungsform des erfindungsgemäß einsetzbaren Kunststoffprofils 1 in einer ausschnittsweisen Querschnittsdarstellung gezeigt. In dieser Ausführungsform des Kunststoffprofils 1 zeigt die an der zum Falzgrund 3 gerichteten Seite 10 befindliche Hohlkammer 5' eine Öffnung 13 auf, die sich über die gesamte Länge des erfindungsgemäßen Kunststoffprofils 1 erstreckt. Dadurch wird die Einführung einer Verkabelung eines ggf. in das Kunststoffprofil 1 eingesetzten Elektrogeräts (beispielsweise eines Lüftungssystem) einfach in die Hohlkammer 5' ermöglicht und kann leicht durch diese geführt werden. Dabei sind an beiden Seiten der Öffnung 13 bevorzugt Stegreste 14, 14' des Kunststoffprofils 1 angeordnet. Mittels dieser Stegreste 14, 14' kann ein Deckelprofil 15 mit dem Kunststoffprofil 1 in Eingriff gebracht werden, durch das die Öffnung 13 bevorzugt über ihre gesamte Länge verschlossen werden kann. Dabei ist es bevorzugt, wenn das Deckelprofil 15 über Rastelemente 16, 16' verfügt, die die Stegreste 14, 14' hintergreifen und somit eine Rastverbindung zwischen dem Deckelprofil 15 und dem Kunststoffprofil 1 ausgebildet wird (vgl. Fig. 4).

In Fig. 5 ist ein Kunststoffprofil, welche nicht zum Gegenstand der Erfindung gehört, in einer Querschnittsansicht gezeigt. In diesem Beispiel sind oberhalb der erfindungsgemäß relevanten Holkammern 5, 5' eine weitere Hohlkammer 161 ausgebildet, die sich an die Nut 12 zur Aufnahme eines Glasdichtungsprofils (nicht dargestellt) in Richtung zur Außenseite 9 des Profils 1 anschließt. Auch diese weitere Hohlkammer 161 kann zur Entwässerung und Belüftung der durch das erfindungsgemäße Kunststoffprofil 1 gebildeten Rahmenbaugruppe 11 dienen.

Das Kunststoffprofil 1 durch ein Kernprofil 7 aus faserverstärktem Kunststoff, vorzugsweise aus glasfaserverstärktem Polyvinylchlorid, 7 und einem Mantelprofil 8 aus unverstärktem Kunststoff, vorzugsweise aus unverstärktem Polyvinylchlorid (PVC-U), gebildet. In der in Fig. 5 gezeigten Ausführungsform sind die Stege der Hohlkammer 5' ein Teil des Mantelprofils 8, also aus nicht verstärktem Hart-PVC.

In Fig. 6 ist eine weitere Ausführungsform des erfindungsgemäß einsetzbaren Kunststoffprofils 1 in einer ausschnittweisen Querschnittsdarstellung gezeigt. In dieser Ausführungsform des Kunststoffprofils 1 umfasst die an der zum Falzgrund 3 gerichteten Seite 10 befindliche Hohlkammer 5' eine Öffnung 13 auf, die sich über die gesamte Länge des Kunststoff-Hohlprofils 1 erstreckt. Dadurch wird die Einführung einer Verkabelung eines ggf. in das Kunststoffprofil 1 eingesetzten Elektrogeräts (beispielsweise eines Lüftungssystem) einfach in die Hohlkammer 5' ermöglicht und die Verkabelung durch diese geführt werden. Dabei sind an beiden Seiten der Öffnung 13 Stegreste 14, 14' des erfindungsgemäßen Kunststoffprofils 1 angeordnet. Mittels dieser Stegreste 14, 14' kann wiederum ein Deckelprofil 15 mit dem Kunststoffprofil 1 in Eingriff gebracht werden, wie es in Bezug auf Fig. 3 und Fig. 4 beschrieben ist.

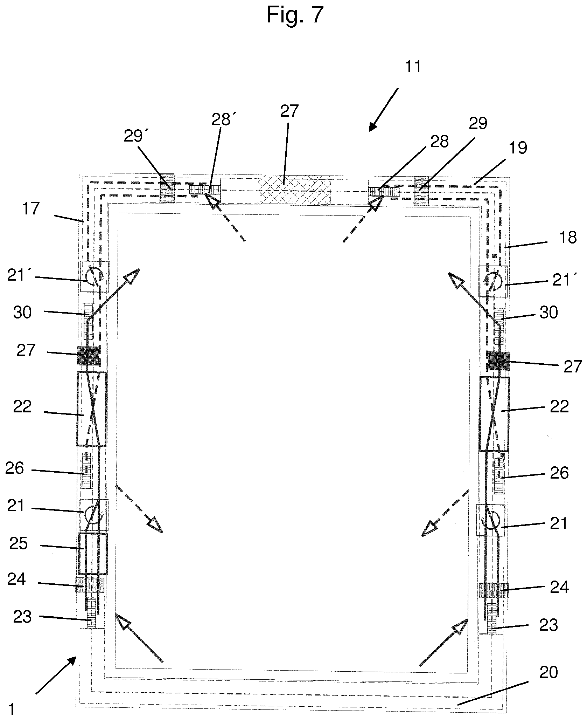

In Fig. 7 ist exemplarisch eine schematische Darstellung einer erfindungsgemäßen Rahmenbaugruppe 11 gezeigt. Die erfindungsgemäße Rahmenbaugruppe 11 ist dabei als eine Fenster-Rahmenbaugruppe 11 ausgeführt, in die ein als Lüftungssystem ausgebildetes Elektrogerät integriert ist. Die erfindungsgemäße Rahmenbaugruppe 11 ist aus vier in den Ecken verschweißten Holmen eines Kunststoffprofils 1 zusammengesetzt. Dabei werden der in Abb. 7 links dargestellte Holm 17, der rechts dargestellte Holm 18 und der obere Holm 19 durch ein erfindungsgemäß verwendbares Kunststoffprofil 1 gebildet, während der untere Holm 20 nicht notwendigerweise aus einem derartigen Kunststoffprofil 1 gebildet ist. Es ist jedoch bevorzugt, alle vier Holme aus einem erfindungsgemäß verwendbaren Kunststoffprofil 1 zu bilden. In der in Fig. 7 dargestellten Ausführungsform ist der untere Holm 20 aus dem Kunststoffprofil 1 des Stands der Technik ausgebildet, wie es in Fig. 1 dargestellt ist. Dabei ist es bevorzugt, das Verschweißen der auf Gehrung geschnittenen Profilholme 17, 18, 19, 20 derart auszuführen, dass die Hohlkammern der einzelnen Profile umlaufend ausgeführt sind. Zumindest sollen die für die Luftführung des Lüftungssystems erforderlichen Profilholme derart miteinander verschweißt sein, dass die Hohlkammern der miteinander verschweißten linken, rechten und oberen Profilholme 17, 18, 19 in diesen Bereichen durchgängig sind.

Dabei sind der linke Holm 17 und der rechte Holm 18 identisch zueinander ausgeführt. Exemplarisch umfasst der linke Holm 17 der erfindungsgemäßen Rahmenbaugruppe 11 zwei vorzugsweise als Radiallüfter ausgebildete Lüftungselemente 21, 21', zwischen denen ein vorzugsweise als Gegenstrom-Wärmetauscher ausgebildeter Wärmetauscher 22 angeordnet ist. Darüber hinaus ist in den linken Profilholm 17 ein Außenluftgitter 23, ein Filter 24, ein Bedien- und Anzeigefeld 25, ein Fortluftgitter 26, eine Klappe 27 sowie ein Zuluftgitter 30 aufgenommen. Der in Abb. 7 rechts dargestellte Profilholm 18 ist zum linken Profilholm 17 analog, wobei der rechte Profilholm 18 im Gegensatz zum linken Profilholm 17 kein Bedien- und Anzeigefeld 25 aufweist. In den oberen Profilholm 19 ist ein Steuerungselement 27 aufgenommen, das etwa mittig im oberen Profilholm 19 angeordnet ist. Das Steuerungselement umfasst dabei auch das Netzgerät des Lüftungssystems. Dieses ist zur Stromversorgung mit dem Hausnetz verbunden. Auf beiden Seiten des Steuerungselements 27 ist in den oberen Holm 19 jeweils ein Abluftgitter 28, 28' und ein Filter 29, 29' integriert. Die Verkabelung des in die erfindungsgemäße Rahmenbaugruppe 11 integrierten Lüftungssystems verläuft dabei in der jeweils zum Falzgrund 3 des entsprechenden Profilholms 17, 18, 19 gerichteten Hohlkammer 5' des Kunststoffprofils 1.

## Patentansprüche

1. Rahmenbaugruppe (10), wobei mindestens einer der die Rahmenbaugruppe (10) aufbauenden Profilholme aus einem Kunststoffprofil (1) für eine Fenster-Rahmenbaugruppe (10) mit einem Falzgrund (3) und einem Außenüberschlag (2) mit wenigstens einer Hohlkammer (5) gebildet ist, wobei der Außenüberschlag (2) im Querschnitt in Richtung von einer dem Falzgrund (3) abgewandten Außenseite (9) zu einer zum Falzgrund (3) gerichteten Seite (10) zumindest eine zur Außenseite (9) gerichtete Hohlkammer (5) und eine zur zum Falzgrund (3) gerichteten Seite (10) gerichtete Hohlkammer (5') umfasst, und die zur zum Falzgrund (3) gerichteten Seite (10) gerichtete Hohlkammer (5') eine Öffnung (13) umfasst, wobei sich die Öffnung (13) über die gesamte Länge des Kunststoffprofils (1) erstreckt,
wobei
ein Lüftungssystem aufgenommen ist, **dadurch gekennzeichnet, dass** die Verkabelung des Lüftungssystems zumindest teilweise in der zur zum Falzgrund (3) gerichteten Seite (10) gerichteten Hohlkammer (5') des Kunststoffprofils (1) aufgenommen ist.

2. Rahmenbaugruppe (10) nach Anspruch 1, **dadurch gekennzeichnet, dass** die Öffnung (13) durch ein Deckelprofil (15) verschließbar ist.

3. Rahmenbaugruppe (10) nach Anspruch 1 oder Anspruch 2, **dadurch gekennzeichnet, dass** das Kunststoffprofil (1) ein Blendrahmenprofil (1) ist.

4. Rahmenbaugruppe (10) nach Anspruch 1, **dadurch gekennzeichnet, dass** in der zur zum Falzgrund (3) gerichteten Seite (10) gerichtete Hohlkammer (5') des Kunststoffprofils (1) mindestens ein Kabel aufgenommen ist.

## Claims

1. Frame assembly (10), wherein at least one of the profiled bars making up the frame assembly (10) is formed from a plastic profile (1) for a window frame assembly (10) with a rebate (3) and an outer lip (2) with at least one hollow chamber (5), wherein the outer lip (2) comprises in cross-section in the direction from an outside (9) facing away from the rebate (3) to a side (10) facing towards the rebate (3) at least one hollow chamber (5) facing towards the outside (9) and a hollow chamber (5') facing towards the side (10) facing towards the rebate (3), and the hollow chamber (5') facing towards the side (10) facing towards the rebate (3) comprises an opening (13), wherein the opening (13) extends along the entire length of the plastic profile (1),
wherein a ventilation system is accommodated, **characterized in that** the cabling of the ventilation system is at least partially accommodated in the hollow chamber (5') of the plastic profile (1) facing towards the side (10) facing towards the rebate (3).

2. Frame assembly (10) according to claim 1, **characterized in that** the opening (13) can be sealed by a cover profile (15).

3. Frame assembly (10) according to claim 1 or claim 2, **characterized in that** the plastic profile (1) is an outer frame profile (1).

4. Frame assembly (10) according to claim 1, **characterized in that** at least one cable is accommodated in the hollow chamber (5') of the plastic profile (1) facing towards the side (10) facing towards the rebate (3).

## Revendications

1. Module de cadre (10), dans lequel au moins un des montants profilés construisant le module de cadre (10) est formé à partir d'un profilé en matière plastique (1) pour un module de cadre de fenêtre (10) avec un fond de feuillure (3) et un débord extérieur (2) avec au moins une chambre creuse (5), dans lequel le débord extérieur (2) comprend dans la section transversale en direction d'un côté extérieur (9) opposé à la base de feuillure (3) vers un côté (10) dirigé vers la base de feuillure (3) au moins une chambre creuse (5) dirigée vers le côté extérieur (9) et une chambre creuse (5') dirigée vers le côté (10) dirigé vers la base de feuillure (3), et la chambre creuse (5') dirigée vers le côté (10) dirigé vers la base de feuillure (3) comprend une ouverture (13), dans lequel l'ouverture (13) s'étend sur toute la longueur du profilé en matière plastique (1),
dans lequel un système d'aération est logé, **caractérisé en ce que** le câblage du système d'aération est logé au moins en partie dans la chambre creuse (5'), dirigée vers le côté (10) dirigé vers la base de feuillure (3), du profilé en matière plastique (1).

2. Module de cadre (10) selon la revendication 1, **caractérisé en ce que** l'ouverture (13) peut être fermée par un profilé de couvercle (15).

3. Module de cadre (10) selon la revendication 1 ou la revendication 2, **caractérisé en ce que** le profilé en matière plastique (1) est un profilé de cadre dormant (1).

4. Module de cadre (10) selon la revendication 1, **caractérisé en ce qu'**au moins un câble est logé dans la chambre creuse (5'), dirigée vers le côté (10) dirigé vers la base de feuillure (3), du profilé en matière plastique (1).
